Europäisches Patentamt

European Patent Office

Office européen des brevets

(11) Publication number: **0 077 640**

**B1**

(12) **EUROPEAN PATENT SPECIFICATION**

(45) Date of publication of patent specification: **24.04.85**

(51) Int. Cl.⁴: **B 23 K 9/18**

(21) Application number: **82305457.2**

(22) Date of filing: **14.10.82**

(54) **Four-electrode submerged arc welding process.**

(30) Priority: **20.10.81 JP 166387/81**

(43) Date of publication of application:
**27.04.83 Bulletin 83/17**

(45) Publication of the grant of the patent:
**24.04.85 Bulletin 85/17**

(84) Designated Contracting States:
**DE FR IT**

(56) References cited:
**CA-A-1 106 453**
**GB-A-1 497 599**

(73) Proprietor: **KAWASAKI STEEL CORPORATION**
**1-28, Kitahonmachi-Dori 1-Chome**
**Chuo-ku Kobe City (JP)**

(72) Inventor: **Kawabata, Fumimaru**
**Kawasaki Seitsu K.K. C604, 3rd Minami-Machi-Ryo**
**20-6, Minami-Machi 2-Chome Chiba City (JP)**
Inventor: **Shiga, Atsushi**
**738 Hoshikuki-Cho**
**Chiba City (JP)**
Inventor: **Yamaguchi, Tadamasa**
**8-8 Misora 1-Chome**
**Yotsukaido City (JP)**

(74) Representative: **Overbury, Richard Douglas et al**
**HASELTINE LAKE & CO Hazlitt House 28**
**Southampton Buildings Chancery Lane**
**London WC2A 1AT (GB)**

Courier Press, Leamington Spa, England.

## 0 077 640

**Description**

This invention relates to a four-electrode tandem submerged arc welding process, and more particularly a four-electrode welding process capable of performing a submerged arc welding with high efficiency and high quality for manufacturing large-diameter steel pipes.

The submerged-arc welding process has been widely used for welding of large-diameter steel pipes which have been once formed in U-shaped cross-section by U-shaped dies and then in O-shaped cross-section by O-shaped dies. It has been strongly required to speed up the submerged arc welding in view of the requirement to improve the production efficiency in response to the rapidly increased demand of the large-diameter steel pipes, because the welding speed relates directly to the improvement of the production efficiency. Various investigations have been effected in order to improve the welding speed. To increase the number of electrodes is one of the solutions.

The three-electrode welding process has been mainly used for this purpose, which has brought about a great improvement of the welding speed in comparison with the two-electrode welding process. However, the welding speed achieved by the three-electrode welding process does not meet the welding speed now required.

There are many factors which would limit the welding speed, among which following two factors are important in the most cases:

1) insurance of sufficient penetration depth, and
2) avoidance of welding defects.

In general, the welding speed is determined by selecting the welding heat input (electric current×voltage/welding speed) to fulfil the condition of 1). In order to fulfil the condition at higher welding speeds, however, the electric current must be unavoidably increased. The increased current tends to increase "undercuts" which are grooves melted into the base metal adjacent to the toe of a weld which are left unfilled with weld metal and are thus opposed to the condition of 2). Moreover, if the welding speed is not increased enough to meet the increased current, the welding heat input is unduly increased to adversely affect the toughness of the welded metal. Under the circumstances, the three-electrode welding method cannot more increase the welding speed beyond that achieved at this stage.

In view of this, the four-electrode welding process is essential in order to rapidly increase the welding speed. However, the multielectrode process will cause electromagnetic interference of electrode current and ground current. Accordingly, a proper selection of current phases or connections between electrodes and power source which determine the interference is essential. If the selection is not correct, the welding quality becomes inferior and high speed welding by the multielectrode welding process cannot be accomplished.

On the other hand, an increase in the number of electrodes rapidly increases the number of connections which can theoretically be chosen and this makes it difficult to select the proper connections. Even if proper connections for the three-electrode welding process are applied to the four-electrode welding process, good results cannot be expected.

In GB—A—1,497,599 there is described a four-electrode submerged arc welding process intended to enable higher welding speeds to be obtained than in the case of three-electrode welding processes. In accordance with this proposal, two pairs of transformers coupled in respective Scott connections are provided for connecting the electrodes and the metal to be welded to a multiphase alternating current source. Each transformer has a secondary winding and is associated with one electrode. In each case one terminal of the secondary winding of a transformer is connected to its associated electrode and the other terminal of the secondary winding is connected to the workpiece. The arrangement is such that the phase difference in the currents supplied to adjacent electrodes is 90°.

It is an object of the present invention to provide an improved four-electrode submerged arc welding process employing connections for electrodes which prevent or suppress undercuts occurring at high welding speeds and thereby allows welded articles of high quality to be produced at a high welding speed.

Accordingly, the present invention provides a four-electrode submerged arc welding process wherein a first electrode (L), a second electrode ($M_1$), a third electrode ($M_2$) and a fourth electrode (T) are aligned in a row from front to rear in the welding direction so that the first electrode is at the front and the fourth electrode is at the rear and said electrodes are all supplied with alternating current, characterised in that (i) said electrodes are connected such that the electromagnetic force ($\bar{F}_{x4}$) in a direction opposite to said welding direction and acting upon the middle point of the arc from said fourth electrode (T) substantially satisfies the relationship $-25 \leq \bar{F}_{x4} \leq -10$ (N/m), (ii) the currents supplied to three of the electrodes have phase differences of 120° with respect to one another, and (iii) the currents supplied to the first and the fourth electrodes have a phase difference of $0° \pm 30°$.

For a better understanding of the invention and to show how the same may be carried into effect, reference will now be made, by way of example, to the accompanying drawings, in which:

Fig. 1 is an explanatory view of a schematic model of an electrode arrangement for a four-electrode submerged arc welding process used for the calculation of electromagnetic force;

Fig. 2 illustrates various current phases for four-electrode welding including the process according to the invention;

2

Fig. 3 illustrates a three phase power source connection according to one embodiment of the invention;

Fig. 4 is a sectional view of a base metal having a V-shaped groove used for an experiment to be hereinafter described;

Fig. 5 is a graph showing the relationship between undercut rate and electromagnetic force for different welding speeds and connections; and

Fig. 6 is a graph showing the relationship between undercut rates and electromagnetic force for different welding fluxes and connections.

In general, the welding speed in submerged arc welding is limited in most cases by the occurrence of undercuts because the higher the welding speed, the stronger is the flow of molten steel directed rearwardly from immediately below the arc and this results in a lack of molten steel for bead formation. In order to prevent or suppress undercuts, it has been considered to be effective to control the rearward flow of molten steel or reverse it so that it flows in a forward direction.

In a four-electrode submerged arc welding process, it is easily supposed, from investigations of the three-electrode welding process, that the first electrode (L electrode) mainly serves to dig the base metal, that the second electrode ($M_1$ electrode) and the third electrode ($M_2$ electrode) partially perform a digging action and partially build up molten steel to form beads, and the fourth electrode (T electrode) exclusively performs a bead forming action.

The inventors of this application have studied the fourth electrode (T electrode) and carried out investigations with a view to preventing or suppressing undercutting when welding at high speeds by suppressing the rapid rearward flow of molten steel with the aid of the pressure of the T electrode arc by suitably selecting the connections for the current supplied to the electrodes so as to control and deflect the arc.

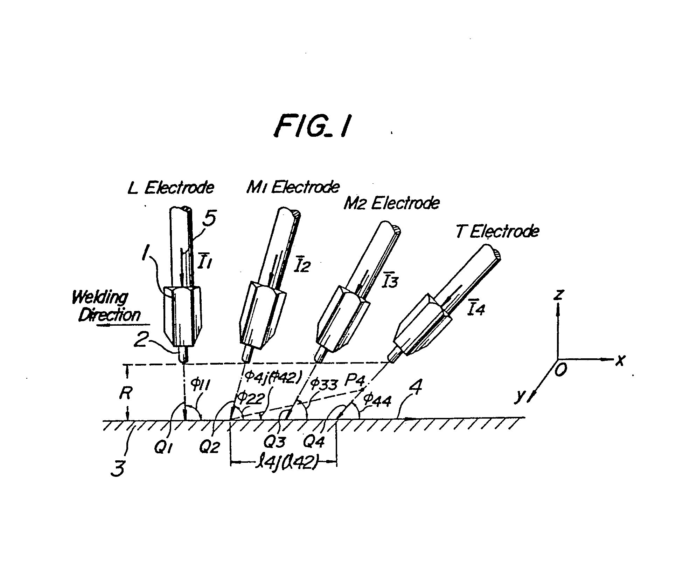

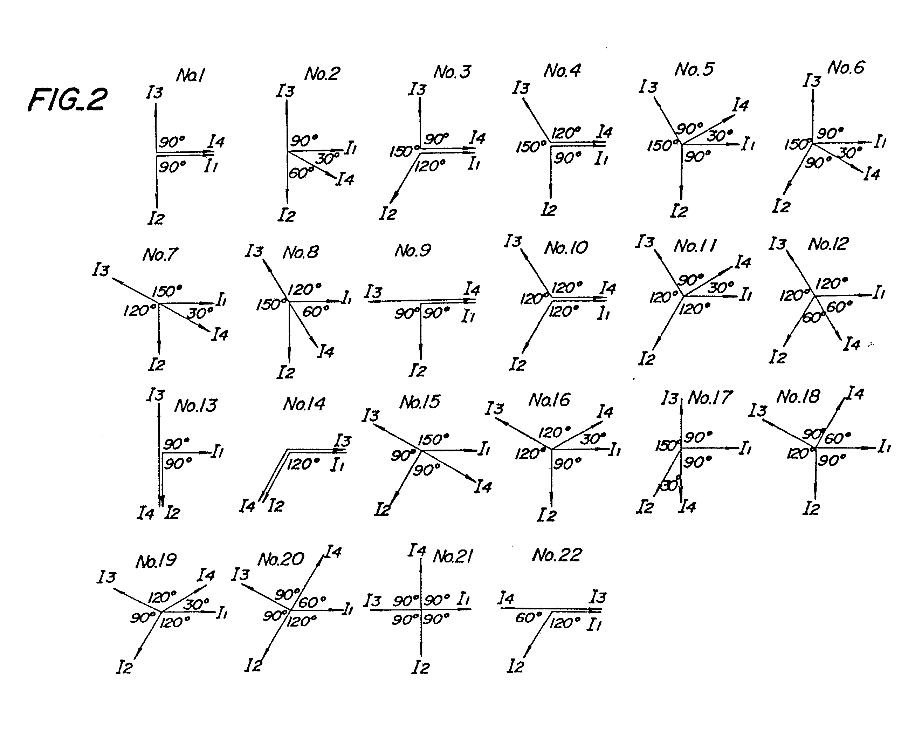

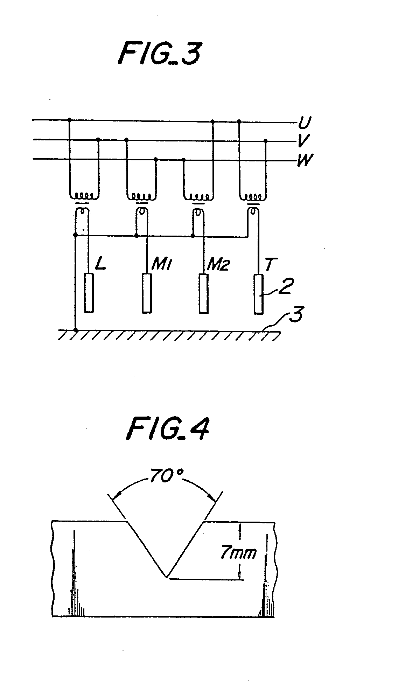

However, there is a great number of possible connections which makes it difficult to find the best connections for this purpose. Accordingly, it was necessary to specify the respective connections quantitatively. In view of this, the inventors have calculated the electromagnetic force acting upon the T electrode arc so as to deflect it using the schematic model shown in Fig. 1 to specify the respective connections and have found undercutting to be very effectively prevented or suppressed when the calculated electromagnetic force is within a specific range.

In consideration of the functions of the respective electrodes in the four-electrode welding process, the L, $M_1$, $M_2$ and T electrodes are inclined at angles of $\phi_{11}$—$\phi_{44}$ (45°—90°) as shown in Fig. 1. The electromagnetic force $\bar{F}x_4$ acting upon the middle point $P_4$ of the T electrode arc in a welding direction is practically effectively indicated in the following equation according to the electromagnetics (assuming that the welding direction is negative).

$$\bar{F}x_4 = \frac{\mu_0 \bar{I}_4}{2\pi R} \left\{ \sum_{j=1}^{3} \bar{I}_j \cot \frac{\phi_{4j} - \phi_{jj}}{2} \sin\phi_{4J}\sin44\cos\theta_{4J} \right.$$

$$\left. - \sum_{j=1}^{4} \bar{I}_j (1+\cos\phi_{4j})\cos\theta_{4j} \right\} \tag{1}$$

where

$$\phi_{4j} = \cot^{-1}(\cot\phi_{4j} - I_{4j}/R) \tag{2}$$

where

j is number of electrodes (1—4),

$\bar{I}_j$ is effective value of current of j-th electrode,

R is presumed arc length (10 mm),

$I_{4j}$ is distance between the fourth electrode (T electrode) and j-th electrode (in the strict sense, distance between intersections of the surface of base metal and center axes of electrode),

$\mu_0$ is magnetic permeability in vacuum (=$4\pi \times 10^{-7}$ N/A$^2$, and

$\theta_{4j}$ is phase difference between effective values of current of fourth (T) and j-th electrodes.

Referring to Fig. 1, a reference numeral 1 denotes electrode tips having welding wires 2 in opposition to a base metal 3. Electrode current is denoted by 5 and ground current or earthing current by 4.

The electromagnetic forces $\bar{F}x_4$ were calculated using the equations (1) and (2) under the welding conditions with appropriate heat input as shown in Table 1 as to various connections whose phase angles are shown in Fig. 2. It has been found in experiments that when the electromagnetic forces $\bar{F}x_4$ are within the range of $-25 \leq \bar{F}x_4 \leq -10$ (N/m) with the connections Nos. 8—16 in Fig. 2, the undercuts are remarkably prevented or suppressed. Particularly, the connections Nos. 10, 11 and 16 whose electromagnetic forces are within the range of $-25 \leq \bar{F}x_4 \leq -15$ (N/m) are optimum at higher welding speeds, although the range of the electromagnetic force is slightly narrower.

TABLE 1
Four-electrode welding condition and arrangement used for the calculation

| Electrode (j) | Current $I_i$ (A) | Voltage $E_i$ (V) | Inclination of electrode $\phi_{jj}(°)$ | Distance between electrode (mm) | Welding speed (cm/min) | Thermal input for welding (KJ/cm) |
|---|---|---|---|---|---|---|
| L (1) | 1150 | 38 | 90 | | | |
| M$_1$ (2) | 1050 | 42 | 75 | 13 | 220 | 37 |
| M$_2$ (3) | 900 | 42 | 60 | 13 | $\int$ | $\int$ |
| T (4) | 800 | 42 | 45 | 13 | 260 | 43 |

TABLE 2
Phase angles of connections and electromagnetic force

| No. | *$\theta_2$ (deg) | *$\theta_3$ (deg) | *$\theta_4$ (deg) | $\bar{\bar{F}}x_4$ (N/m) |
|---|---|---|---|---|
| 1 | −90 | 90 | 0 | −43.0 |
| 2 | −90 | 90 | −30 | −39.3 |
| 3 | −120 | 90 | 0 | −29.8 |
| 4 | −90 | 120 | 0 | −29.7 |
| 5 | −90 | 120 | 30 | −26.1 |
| 6 | −120 | 90 | −30 | −26.0 |
| 7 | −90 | 150 | −30 | −25.9 |
| 8 | −90 | 120 | −60 | −25.6 |
| 9 | −90 | 180 | 0 | −16.4 |
| 10 | −120 | 120 | 0 | −16.4 |
| 11 | −120 | 120 | 30 | −16.4 |
| 12 | −120 | 120 | −60 | −15.8 |
| 13 | −90 | 90 | −90 | −15.3 |
| 14 | −120 | 0 | −120 | −14.9 |
| 15 | −120 | 150 | −30 | −12.7 |
| 16 | −90 | 150 | 30 | −12.7 |
| 17 | −120 | 90 | −90 | −11.8 |
| 18 | −90 | 150 | 60 | −6.3 |
| 19 | −120 | 150 | 30 | −3.0 |
| 20 | −120 | 150 | 60 | −2.7 |
| 21 | −90 | 180 | 90 | 11.1 |
| 22 | −120 | 0 | 180 | 25.5 |

*$\theta_2$, $\theta_3$ and $\theta_4$ indicate phase angles of current of M$_1$, M$_2$ and T electrodes relative to L electrode.

4

In the experiments, four electrodes (L, $M_1$, $M_2$, and T) for submerged arc welding were aligned with one another in a forward direction of welding and supplied with three-phase alternating current. The connections Nos. 10, 11 and 16 that obtained the best results were such that the phase differences between the currents supplied to three of the electrodes excluding either the front first electrode (L) or the rear fourth electrode (T) were 120° with respect to one another and the current phase difference between the front first electrode (L) and the rear fourth electrode (T) was within 0°±30°. With such connections, in order to obtain the best results the current and voltage were 1,100—1,250 A and 35—40 V for the L electrode, 1,000—1,150 A and 40—45 V for the $M_1$ electrode, 900—1,000 A and 40—45 V for the $M_2$ electrode and 750—900 A and 40—45 V for the T electrode. The angles to which the electrodes were inclined to a vertical line perpendicular to the base metal being welded (and plus signed in the direction opposite to the welding direction) were 0°±5° for the L electrode, 15°±5° for the $M_1$ electrode, 30°±5° for the $M_2$ electrode and 40°—45° for the T electrode. The distances between the electrode axes were 13—20 mm for the L and $M_1$ electrodes, 13—20 mm for the $M_1$ and $M_2$ electrodes, and 13—15 mm for the $M_2$ and T electrodes. Under the above welding conditions, the objects of the present invention were achieved for the four-electrode tandem submerged arc welding process.

From the above experiments, it was apparent that undercutting is effectively prevented or mitigated by using the connections whose electromagnetic forces $\overline{F}x_4$ are within $-25 \leq \overline{F}x_4 \leq -15$ (N/m) and connections suitable for preventing the undercuts become fewer at higher welding speeds and that even if the welding current is changed, the preferable range of $\overline{F}x_4$ scarcely changes.

Fig. 3 illustrates one example of actual connections whose phase relation corresponds to No. 10 in Fig. 2.

The invention will be explained with reference to embodiment of the invention.

Example 1

Welding (in this case building up welding) was carried out on steel plates formed with V-shaped grooves having 70 degrees and 7 mm depth shown in Fig. 4 under the four-electrode welding conditions shown in Table 1. Undercut rates defined by overall length of undercut/(measured bead length×2) were obtained to judge the high speed welding working efficiency of the various connections in conjunction with observation of meander and unevenness of beads.

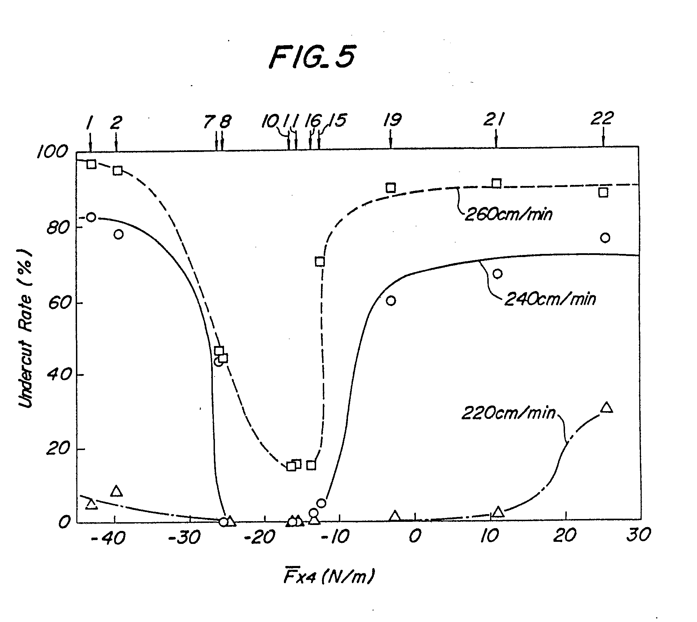

The connections used in the experiments are shown in Fig. 2. Fig. 5 illustrates the results at welding speeds 220, 240 and 260 cm/min which indicate that the connections Nos. 10, 11 and 16 have the greatest effect for suppressing the undercut at these welding speeds. The connections Nos. 7, 8 and 15 exhibit comparatively good results at welding speeds 220 and 240 cm/min but cause remarkable undercuts at the higher welding speed 260 cm/min in comparison with the connections Nos. 10, 11 and 16. This means that the connections Nos. 10, 11 and 16 are also superior at higher welding speeds.

Example 2

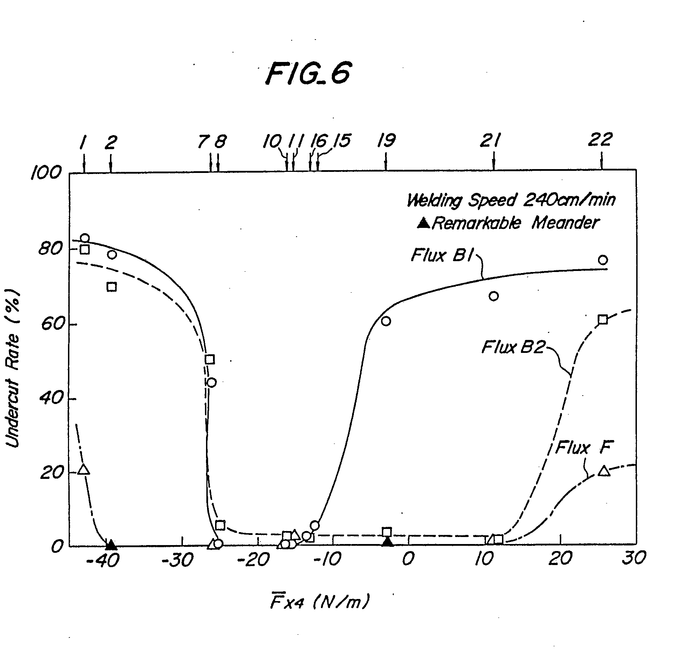

The effect of the connections according to the invention was tested with three different fluxes, $SiOX_2$-CaO-CaF$_2$ base fused type flux F and $SiO_2$-TiO$_2$-Al$_2O_3$-MgO base sintered type fluxes B1 and B2. The welding was effected at welding speed 240 cm/min under the conditions shown in Table 1. The results of the experiment are shown in Fig. 6. It can be seen from Fig. 6 that the connections Nos. 10, 11 and 16 exhibit the good effect for suppressing the undercut regardless of the kinds of flux and do not cause the meander of beads.

Example 3

Maximum possible welding speeds for the connections according to the invention were measured with various base metals having different thicknesses. Table 3 shows the results in comparison with those according to the prior three-electrode welding process (1,130 A and 35 V for first electrode, 850 A and 40 V for second electrode and 680 A and 40 V for third electrode). The four-electrode welding process with the connections Nos. 10, 11 and 16 according to the invention can increase the welding speed up to 1.5—2 times and decrease the welding heat input to about 80% in comparison with the three-electrode welding process.

TABLE 3

Comparison of the four-electrode welding process according to the invention with the three-electrode welding process

| Thickness of base metal (mm) | Four-electrode welding process according to the invention | Prior art three-electrode welding process |
|---|---|---|
| 38 | 100 cm/min, 96 KJ/cm | 50 cm/min, 122 KJ/cm |
| 25.4 | 170 cm/min, 56 KJ/cm | 90 cm/min, 68 KJ/cm |
| 19.5 | 240 cm/min, 40 KJ/cm | 130 cm/min, 47 KJ/cm |
| 12.7 | 250 cm/min, 36 KJ/cm | 180 cm/min, 33 KJ/cm |

As can be seen from the above description, in order to improve the welding efficiency without adversely affecting the welded quality, beyond the limitation of the three-electrode welding process, the four-electrode submerged arc welding process according to the invention employs the suitable connections of four electrodes for the alternating current source in consideration of the electromagnetic forces acting upon the electrode arc to achieve the remarkable improvement of the welding speed maintaining the good welded quality.

**Claims**

1. A four-electrode submerged arc welding process wherein a first electrode (L), a second electrode (M$_1$), a third electrode (M$_2$) and a fourth electrode (T) are aligned in a row from front to rear in the welding direction so that the first electrode is at the front and the fourth electrode is at the rear and said electrodes are all supplied with alternating current, characterised in that

(i) said electrodes are connected such that the electromagnetic force ($\overline{F}x_4$) in a direction opposite to said welding direction and acting upon the middle point of the arc from said fourth electrode (T) substantially satisfies the relationship $-25 \leq \overline{F}x_4 \leq -10$ (N/m),

(ii) the currents supplied to three of the electrodes have phase differences of 120° with respect to one another, and

(iii) the currents supplied to the first and the fourth electrodes have a phase difference of 0°±30°.

2. A process according to claim 1, wherein said electrodes are inclined away from a vertical line perpendicular to the surface of the base metal to be welded in the direction opposite to said welding direction at an angle of 0°±5° for the L electrode, 15°±5° for the M$_1$ electrode, 30°±5° for the M$_2$ electrode and 40°—45° for the T electrode, respectively.

3. A process according to claim 1 or 2, wherein the L electrode is supplied with electric current at 1,100—1,250 A and 35—40 V, the M$_1$ electrode is supplied with electric current at 1,000—1,150 A and 40—45 V, the M$_2$ electrode is supplied with electric current at 900—1,000 A and 40—45 V, and the T electrode is supplied with electric current at 750—900 A and 40—45 V.

4. A process according to claim 1, 2 or 3, wherein the distances between the axes of said electrodes are 13—20 mm for the L and M$_1$ electrodes, 13—20 mm for the M$_1$ and M$_2$ electrodes, and 13—15 mm for the M$_2$ and T electrodes.

**Patentansprüche**

1. Unterpulver-Lichtbogenschweißverfahren mit vier in Schweißrichtung hintereinander in einer Reihe angeordneten Elektroden (L, M$_1$, M$_2$, T), wobei die erste Elektrode (L) die vorderste und die vierte Elektrode (T) die hinterste der Reihe ist und alle Elektroden mit Wechselstrom gespeist sind, dadurch gekennzeichnet, daß

(I) die Elektroden derart angeschlossen sind, daß die im Mittelpunkt des Lichtbogens der vierten Elektrode (T) in Gegenrichtung zur Schweißrichtung wirksame elektromagnetische Kraft ($\overline{F}x_4$) im wesentlichen der Beziehung $-25 \leq \overline{F}x_4 \leq -10$ (N/m) genügt,

(II) die drei der Elektroden zugeführten Ströme einen gegenseitigen Phasenunterschied von 120° aufweisen, und

(III) die der ersten und der vierten Elektrode zugeführten Ströme einen Phasenunterschied von 0°±30° aufweisen.

2. Verfahren nach Anspruch 1, dadurch gekennzeichnet, daß die Elektroden bezüglich einer zur Oberfläche des zu schweißenden Grundmetalles senkrechten vertikalen Linie in Gegenrichtung zur Schweißrichtung geneigt sind, wobei der Neigungswinkel der ersten Elektrode (L) 0°±5°, der der zweiten Elektrode (M$_1$) 15°±5°, der der dritten Elektrode (M$_2$) 30°±5° bzw. der der vierten Elektrode (T) 40° bis 45° beträgt.

6

**0 077 640**

3. Verfahren nach Anspruch 1 oder 2, dadurch gekennzeichnet, daß die erste Elektrode (L) mit einem elektrischen Strom von 1 100 bis 1 250 A und 35 bis 40 V, die zweite Elektrode ($M_1$) mit einem elektrischen Strom von 1000 bis 1150 A und 40 bis 45 V, die dritte Elektrode ($M_2$) mit einem elektrischen Strom von 900 bis 1000 A und 40 bis 45 A und die vierte Elektrode (T) mit einem elektrischen Strom von 750 bis 900 A und 40 bis 45 V gespeist wird.

4. Verfahren nach Anspruch 1, 2 oder 3, dadurch gekennzeichnet, daß die Abstände zwischen den Elektrodenachsen bei der ersten und zweiten Elektrode (L, $M_1$) 13 bis 20 mm, bei der zweiten und dritten Elektrode ($M_1$, $M_2$) 13 bis 20 mm und bei der dritten und vierten Elektrode ($M_2$, T) 13 bis 15 mm betragen.

**Revendications**

1. Procédé de soudage à l'arc submergé à quatre électrodes, où une première électrode (L), une deuxième électrode ($M_1$), une troisième électrode ($M_2$) et une quatrième électrode (T) sont alignées en une rangée allant de l'avant à l'arrière dans le sens de soudage de façon que la première électrode se trouve à l'avant et la quatrième électrode se trouve à l'arrière, et lesdites électrodes sont toutes alimentées en courant alternatif, caractérisé en ce que

(i) lesdites électrodes sont connectées de telle façon que la force électromagnétique ($\overline{F}x_4$), mesurée dans le sens opposé audit sens de soudage, s'exerçant sur le point milieu de l'arc venant de ladite quatrième électrode (T) satisfait sensiblement la relation $-25 \leq \overline{F}x_4 \leq -10$ (N/m),

(ii) les courants délivrés à trois des électrodes ont des déphasages de 120° entre eux, et

(iii) les courants délivrés à la première et à la quatrième électrode ont un déphasage de 0°+30°.

2. Procédé selon la revendication 1, où lesdites électrodes sont respectivement inclinées par rapport à une ligne verticale perpendiculaire à la surface du métal de base à souder dans le sens opposé audit sens de soudage sous un angle de 0°±5° pour l'électrode L, un angle de 15°±5° pour l'électrode $M_1$, un angle de 30°±5° pour l'électrode $M_2$ et un angle de 40° à 45° pour l'électrode T.

3. Procédé selon la revendication 1 ou 2, où l'électrode L reçoit un courant électrique de 1100 à 1250 A sous 35 à 40 V, l'électrode $M_1$ reçoit un courant électrique de 1000 à 1150 A sous 40 à 45 V, l'électrode $M_2$ reçoit un courant électrique de 900 à 1000 A sous 40 à 45 V, et l'électrode T reçoit un courant électrique de 750 à 900 A sous 40 à 45 V.

4. Procédé selon la revendication 1, 2 ou 3, où les distances séparant les axes desdits électrodes sont de 13 à 20 mm pour les électrodes L et $M_1$, de 13 à 20 mm pour les électrodes $M_1$ et $M_2$, et de 13 à 15 mm pour les électrodes $M_2$ et T.

7

FIG. 1

FIG.2

# FIG_3

# FIG_4

# FIG.5

# FIG.6

Welding Speed 240cm/min
▲Remarkable Meander

Flux B1

Flux B2

Flux F

Undercut Rate (%)

$\overline{F}_{X4}$ (N/m)